# EUROPEAN PATENT APPLICATION

(11) **EP 4 821 898 A1**
(43) Date of publication of application: **14.10.2026**
(21) Application number: 25204757.6
(22) Date of filing: 25.09.2025
(51) Int. Cl.: C02F 9/00, B08B 3/14, B08B 3/00, B08B 9/00, C02F 1/00, C02F 1/32, C02F 1/36, C02F 1/38, C02F 1/48, C02F 1/68, C02F 3/34, F01D 25/00

(54) **SYSTEMS AND METHODS FOR PROCESSING ENGINE WASH EFLUENT**

(30) Priority: 11.04.2025 IN 202511035542; 21.08.2025 US 202519306217
(71) Applicant: General Electric Company, Cincinnati, Ohio 45215 (US)
(72) Inventor: M., Anantharaman, 560066 Bengaluru (IN); SWAMINATHAN, Srinivasan, 560066 Bengaluru (IN); PETKAR, Kirti Arvind, 560066 Bengaluru (IN); GANIGER, Ravindra Shankar, 560066 Bengaluru (IN); YAMARTHI, David Raju, 560066 Bengaluru (IN); SIDDAPPA, Shivakumar Hodegere, 560066 Bengaluru (IN); GRAHAM, Andrew Crispin, Bristol, BS34 7JU (GB); INAMDAR, Chirayu Pradip, 560066 Bengaluru (IN); THIMMEGOWDA, Shalini, 560066 Bengaluru (IN)
(74) Representative: Openshaw & Co.

(57) **Abstract**

Systems and methods for processing effluent (105) from a cleaning operation performed on a gas turbine engine (102) are provided herein. In some embodiments, such a system (100) comprises a foam collapsing unit (201A) (110), a particulate removal unit (201B), and/or a microbe treatment unit (201D). The system (100) may also include a detergent digestion unit (201C). The foam collapsing unit (201A) (110) is in fluid communication with an effluent (105) reservoir (104) and is operative to reduce aeration of the effluent (105) and generate a defoamed effluent (107A, 107B, 107C). The particulate removal unit (201B) is operative to separate particulates (239) from the defoamed effluent (107A, 107B, 107C). The microbe treatment unit (201D) is operative to reduce microbial load of the defoamed effluent (107A, 107B, 107C). The particulate removal unit (201B), and the microbe treatment unit (201D) are disposed in serial flow order to treat the defoamed effluent (107A, 107B, 107C) and output a recovered fluid (109) stream.

## Description

### TECHNICAL FIELD

These teachings relate generally to systems and methods for processing effluent from a cleaning operation for an engine and, in particular, for a gas turbine engine.

### BACKGROUND

Gas turbine engines and other turbine systems can accumulate significant amounts of dust and debris during operation. In some scenarios, gas turbine engines and engine components accumulate large layers of dust deposits that may impact operation. Dust deposits can enter an engine during operation and can block engine components, reducing engine performance as a result. In some examples, an accumulation of dust deposits may cause internal damage to an engine if left. Accordingly, it may be desirable to have gas turbine engine wash systems capable of removing dust deposits.

Foam washing is one approach that can be used to clean gas turbine engines to improve engine performance. Foam washing generates an effluent that is typically disposed of following a cleaning operation.

### BRIEF DESCRIPTION OF DRAWINGS

Various needs are at least partially met through provision of the systems and methods for processing engine wash effluent described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic diagram of a system for processing effluent from a gas turbine engine cleaning operation, in accordance with various embodiments of these teachings;
FIG. 2 is a schematic diagram of a cart including at least part of a system for processing effluent from a gas turbine engine cleaning operation, in accordance with various embodiments of these teachings; and
FIG. 3 is a flow diagram of a method of processing effluent from a gas turbine engine cleaning operation, in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The systems and methods described herein provide approaches for processing wash effluent that is generated from a cleaning operation, such as a foam cleaning operation, for a gas turbine engine. The systems and methods employe various units including one or more of a foam collapsing unit, a particulate removal unit, a detergent removal unit, and a microbe treatment unit to remove undesirable components from the effluent and prepare the effluent for safe disposal and/or for re-use as a recovered fluid to generate a fresh cleaning fluid. In some embodiments, one or more of the foam collapsing unit, the particulate removal unit, the detergent removal unit, and the microbe treatment unit are disposed on a portable cart to provide portable effluent management that can be employed, for example, with a portable foam washing cart.

The approaches described herein can recover one or more components from the effluent. In addition, the approaches can clean and treat the effluent for easier disposal. In some examples, effluent treated using the systems and methods described herein can be released to the environment. In other examples, effluent that is treated using the systems and methods described herein can be reconstituted by detergent to generate a fresh cleaning fluid. Various components of the effluent may be broken down, digested, or physically removed from the effluent to facilitate environmentally friendly disposal or recovery of the effluent.

It is contemplated that the systems and methods described herein can be used to clean aircraft engines as well as other turbine systems.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "first", "second", and "third" may be used interchangeably to distinguish one component from another and are not intended to signify location or importance of the individual components.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

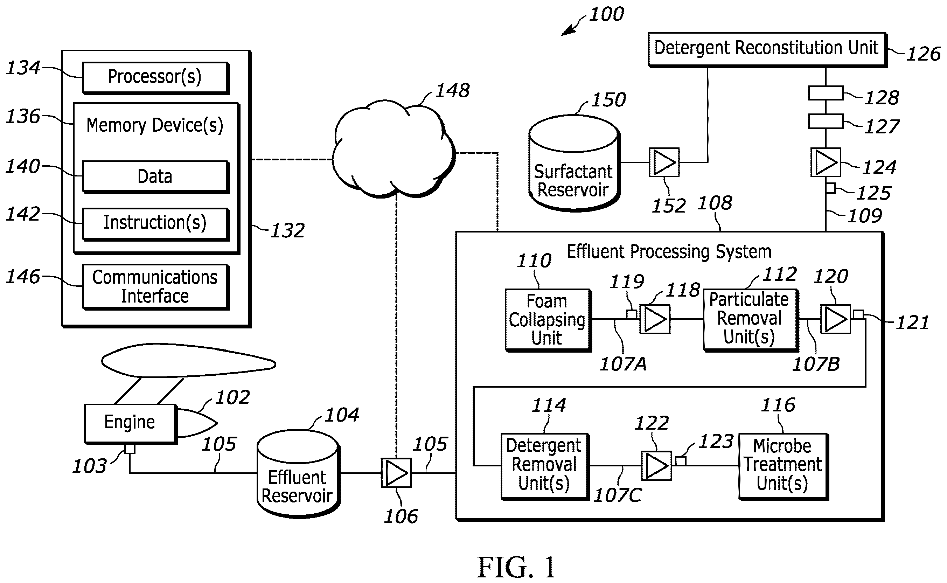

FIG. 1 is a system 100 for processing effluent 105, according to some embodiments. The effluent 105 may be effluent that is collected from a wash or cleaning operation such as a foam washing operation performed on an engine 102. In some embodiments, the engine 102 is a gas turbine engine. The system 100 may be coupled to an access port 103 of the engine 102 through which effluent is discharged from a cleaning operation. The system 100 includes an effluent processing system 108 and a detergent reconstitution unit 126. The system 100 can be used to clean or treat effluent via the effluent processing system 108 to generate a recovered fluid 109. The recovered fluid 109 may be disposed of or, in some embodiments, fed to the detergent reconstitution unit 126 to generate a fresh cleaning fluid.

The effluent 105 from the cleaning operation can include any waste fluid that is discharged from the engine 102 during and/or after the cleaning operation. The effluent may be a foam or other aerated liquid. In some aspects, the effluent 105 includes a mixture of water, detergent, and/or contaminants that are removed from the engine 102 in the cleaning operation. Contaminant deposits may accumulate on the engine 102 during operation and such deposits are removed via a cleaning fluid in the cleaning operation. Thus, portions of such contaminant deposits may be dissolved or suspended in the cleaning fluid when it exits the engine 102 as effluent. Contaminants that can be present in the engine 102 and, accordingly, present in the effluent include but are not limited to solids, particulates, dust, organics, etc. The contaminants can include but are not limited to impurities (e.g., sulfates nitrates, etc.), evaporate deposits (e.g., halite, carbonates, etc.), dust (e.g., aluminosilicate clays), metallic particles, combustion products, salts, etc.

The system 100 includes an effluent reservoir 104 for collecting and storing effluent from the cleaning operation. The effluent reservoir 104 can be any suitable reservoir for holding a liquid such as a tank, tote, or drum. In some approaches, the effluent reservoir 104 includes a plurality of effluent reservoirs that are used to feed the effluent processing system 108 of the system 100.

The effluent processing system 108 includes various units that are used to remove contaminants from the effluent 105 and/or to make the effluent 105 easier to handle. In some embodiments, the effluent processing system 108 is configured as a modular system with various units that are housed at least in part on or within one or more portable carts. The effluent processing system 108 includes a foam collapsing unit 110, one or more particulate removal unit(s) 112, one or more detergent removal unit(s) 114, and one or more microbe treatment unit(s) 116. In some configurations, the foam collapsing unit 110, the particulate removal unit(s) 112, the detergent removal unit(s) 114, and/or the microbe treatment unit(s) 116 are disposed in serial flow order to treat the effluent 105 and output a recovered fluid 109.

Though the effluent processing system 108 is illustrated with each of the aforementioned units, it is to be understood that certain units or portions thereof may be eliminated based on the nature of the effluent 105. For example, in some embodiments, the effluent processing system 108 does not include the detergent removal unit 114. Further, the various units of the effluent processing system 108 can be disposed in the order shown in the illustrated embodiment, or they can be disposed in a different order.

The effluent processing system 108 is configured to receive the effluent 105, for example, from the effluent reservoir 104. In some configurations, the effluent processing system 108 is disposed downstream of the effluent reservoir 104. Any suitable devices or equipment can be used to move the effluent 105 from the effluent reservoir 104 into the effluent processing system 108. In the exemplary configuration illustrated in FIG. 1, an effluent supply pump 106 is disposed upstream of the effluent processing system 108. The effluent supply pump 106 is operatively coupled to the effluent reservoir 104 to deliver fluid from the effluent reservoir 104 to the effluent processing system 108. The effluent supply pump 106 pressurizes flow of the effluent 105 through the effluent processing system 108.

The foam collapsing unit 110 is configured to receive the effluent 105 and generate a defoamed effluent 107A. The defoamed effluent refers to a stream or portion of effluent that has a level or amount of aeration that has been reduced as compared with an initial effluent portion or stream. In the illustrated embodiment, the foam collapsing unit is the first unit that the effluent 105 passes through in the effluent processing system 108. So positioned, the foam collapsing unit 110 collapses at least a portion of the bubbles present in the effluent 105, making the effluent easier to handle in downstream units. However, in other embodiments, the foam collapsing unit 110 may be positioned downstream of another unit of the effluent processing system 108. The foam collapsing unit 110 is operative to reduce aeration of the effluent and generate a defoamed effluent 107A. In some configurations, the foam collapsing unit 110 is in fluid communication with the effluent reservoir 104. The foam collapsing unit 110 may include at least one of a physical agitation device, a chemical treatment unit, or an ultraviolet (UV) light treatment unit.

The physical agitation device employed in the foam collapsing unit 110 may be any device operable to reduce aeration levels of a liquid by physically disturbing bubbles in the liquid. Suitable physical agitation devices can include but are not limited to a sonication device, a spray device, a vortex separator, or a centrifugal blower. In some aspects, the sonication device includes a vibrating element such as an ultrasonic transducer that generates ultrasonic vibrations to collapse bubbles present in a liquid to destroy a foam. The sonication device may be immersed in the effluent to collapse the bubbles present therein. The sonication device may be battery operated to eliminate the need for a power supply and its conversion. In some embodiments, the sonication device operates at a frequency in the range of about 10 kilohertz to about 40 kilohertz. In some aspects, a spray device may operate by spraying liquid effluent onto a surface, causing droplets of the liquid to impact bubbles present in the foam, causing the bubbles to break.

In some embodiments, it is contemplated that the physical agitation device (e.g., the sonication device) can be used to clean other equipment or devices in the effluent processing system 108. For example, where filters are employed in the particulate removal unit(s) 112, the sonication device can be used to remove particulates from the filters for filter cleaning.

In other configurations, the foam collapsing unit 110 may be a centrifugal blower operated in the reverse direction compared to the conventional operating direction, the action of the scroll being to shear and break down bubbles in the foam.

In some configurations, the chemical treatment unit employed in the foam collapsing unit 110 includes a source of a foam collapsing additive and a delivery device. In some examples, the source of the foam collapsing additive is a storage reservoir. Any suitable reservoir (e.g., tank, tote, drum) can be used to store the foam collapsing additive. Any suitable foam collapsing additive can be used. In some embodiments, the foam collapsing additive includes a lipid or a hydrophobic particle. Suitable lipids include but are not limited to vegetable oil, olefins, hydrophobic lipids, and fatty acids.

In some embodiments, the UV light treatment unit employed in the foam collapsing unit 110 includes a UV light source that is configured to irradiate the effluent with ultraviolet light to reduce the aeration level of the effluent.

In some embodiments, a first sensor 119 is disposed downstream of the foam collapsing unit 110 to measure characteristic(s) of the defoamed effluent 107A. Such characteristics can include at least one of a color, pH, chemistry, conductivity, or a level of total dissolved solids. In some embodiments, the characteristic(s) of the defoamed effluent 107A is/are indicative of a level of aeration and can include, for example, a turbidity, a color, a foam volume, a liquid bubble size, a liquid fraction, and/or electrical conductivity of the defoamed effluent 107A. In some embodiments, the characteristic(s) of the defoamed effluent is/are indicative of a level of particulate matter present in the defoamed effluent 107A and can include a turbidity, a color, a level of total dissolved solids (TDS), and/or an electrical conductivity of the defoamed effluent 107A. In some embodiments, the characteristic(s) is/are indicative of an amount of detergent present in the defoamed effluent 107A and can include a pH value, a chemistry (e.g., a concentration of a surfactant or a detergent component), or a relative quantity of constituent components present in the defoamed effluent 107A. The first sensor 119 may be disposed upstream of other unit(s) in the effluent processing system, such as the particulate removal unit(s) 112, the detergent removal unit(s) 114, and/or the microbe treatment unit(s) 116. The first sensor 119 can be used to provide information on the quality of the defoamed effluent 107A to a controller such as the controller(s) 132.

Downstream treatment or processing of the defoamed effluent 107A can then be adjusted, for example, by the controller(s) 132, based on the characteristic(s) of the defoamed effluent 107A. For example, operating parameters of the particulate removal unit(s) 112, the detergent removal unit(s) 114, and/or the microbe treatment unit(s) 116 can be adjusted based on the characteristic(s) of the defoamed effluent 107A. Operating parameters of particulate removal unit(s) 112 that can be adjusted based on characteristics of the defoamed effluent 107A include but are not limited to an amount of output fluid recycled through the unit. Operating parameters of detergent removal unit(s) 114 that can be adjusted based on characteristics of the defoamed effluent 107A include but are not limited to an amount of output fluid recycled through the unit. Operating parameters of the microbe treatment unit(s) 116 that can be adjusted based on characteristics of the defoamed effluent 107A include but are not limited to an amount of output fluid recycled through the unit.

In some embodiments, a first pump 118 is disposed downstream of the foam collapsing unit 110 for delivering the defoamed effluent 107A to another unit of the effluent processing system 108, such as the particulate removal unit(s) 112, the detergent removal unit(s) 114, and/or the microbe treatment unit(s) 116. However, in some embodiments, the first pump 118 is omitted and, instead, the effluent supply pump 106 is used to move the defoamed effluent 107A through the effluent processing system 108.

The particulate removal unit(s) 112 is in fluid communication with the defoamed effluent 107A and is operative to separate particulates from the defoamed effluent 107A. Particulates can be from any source and, in some aspects, include components of a detergent that is present in the effluent. In some aspects, the particulates removed include contaminants removed from the engine 102 during the cleaning operation. The particulate removal unit(s) 112 can include at least one of a settlement tank with a flocculant, a centrifugal separator, a vortex separator, a filter, or a magnetic separator.

The filters can be at least one of a sand filter, a paper filter, or a mesh screen. Further, the filters may include one or more of a fine filter and a coarse filter. Coarse filters may have micron rating sin the range of about 50 microns or higher, about 100 microns or higher, about 100 microns to about 500 microns, or about 50 microns to about 500 microns. Coarse filters can remove particles such as sand, sediment, and/or rust. Fine filters may have micron ratings in the range of about 50 microns or less, about 10 microns or less, or in some aspects about 5 microns or less. Fine filters can remove particles such as fine dirt, clay silt, and/or bacteria.

Multiple layers of filters (e.g., coarse and fine filters) can be arranged in series, for example, based on a composition of the effluent 105. The filters can be arranged in multiple layers configured to first remove the largest particles with a coarse or large screen size filter, and ultimately to remove the smallest particles with the smallest screen size filter. In some embodiments, one or more intermediate screen size filters are disposed between the coarse and fine filters, in descending screen size order so that progressively smaller particles are removed in sequence from the fluid. Further, the filters can be a horizontal filter or a vertical filter. In a horizontal filter configuration, the filter is arranged generally flat or parallel to the ground. In a vertical filter configuration, the filter stands upright, allowing particles to fall away from the filter via gravity.

The settlement tank can be a vessel that includes at least one flocculant that causes particles to clump together for removal. Suitable flocculants include but are not limited to activated carbon, graphite oxide, carboxymethyl cellulose (CMC), and/or polyanionic cellulose.

In some embodiments, a second sensor 121 is disposed downstream of the particulate removal unit(s) 112 to measure characteristic(s) of the defoamed effluent 107B at the outlet of the particulate removal unit(s) 112. It is also contemplated that the second sensor 121 can be disposed within the particulate removal unit(s) 112. In some embodiments, the characteristic(s) of the defoamed effluent are indicative of a level of particulate matter present in the defoamed effluent. Such characteristics can include but are not limited to a turbidity, a color, a level of total dissolved solids (TDS), and/or an electrical conductivity of the defoamed effluent 107B. In some embodiments, the characteristic(s) are indicative of an amount of detergent present in the defoamed effluent 107B and can include a pH value, a conductivity measurement, a chemistry (e.g., a concentration of a surfactant or a detergent component), or a relative quantity of constituent components present in the defoamed effluent 107B. In some embodiments, the second sensor 121 is a pressure sensor that is configured to measure a pressure of the defoamed effluent 107B at the outlet of the particulate removal unit(s) 112. The second sensor 121 can disposed upstream of other unit(s) in the effluent processing system, such as the detergent removal unit(s) 114 and/or the microbe treatment unit(s) 116.

The second sensor 121 can be used to provide information on the quality of the defoamed effluent 107B to a controller such as the controller(s) 132. Downstream treatment or processing of the defoamed effluent 107B can then be adjusted, for example, by the controller(s) 132, based on the characteristic(s) of the defoamed effluent 107B. For example, operating parameters of the detergent removal unit(s) 114 and/or the microbe treatment unit(s) 116 can be adjusted based on the characteristic(s) of the defoamed effluent 107B. Operating parameters of detergent removal unit(s) 114 that can be adjusted based on characteristics of the defoamed effluent 107B include but are not limited to an amount of output fluid recycled through the unit. Operating parameters of the microbe treatment unit(s) 116 that can be adjusted based on characteristics of the defoamed effluent 107B include but are not limited to an amount of output fluid recycled through the unit.

In some aspects, one or more filters of the particulate removal unit(s) 112 can be cleaned by backwashing the filters. Information from the second sensor 121, for example regarding the quality or pressure of the defoamed effluent 107B, may indicate whether the filter(s) are ready for back-washing. For example, when the defoamed effluent 107B has a high pressure or a high particulate content, the one or more filters may be backwashed or replaced.

In some embodiments, a second pump 120 is disposed downstream of the particulate removal unit(s) 112 for delivering the defoamed effluent 107B to another unit of the effluent processing system 108, such as the detergent removal unit(s) 114 and/or the microbe treatment unit(s) 116. However, in some embodiments, the second pump 120 is omitted and, instead, the effluent supply pump 106 is used to move the defoamed effluent 107B through the effluent processing system 108.

The detergent removal unit(s) 114 is in fluid communication with the defoamed effluent 107B and is operative to break down a portion of a detergent that is present in the defoamed effluent. In some embodiments, the detergent removal unit(s) 114 comprises a chamber or a vessel that includes at least one of an enzyme, a microorganism (e.g., bacteria), or a macro organism (e.g., worms) for digesting detergent present in the defoamed effluent. Microorganisms for use in digestion include but are not limited to bacteria, including anaerobic bacteria or aerobic bacteria. Suitable bacteria for the biodegradation of detergent include but are not limited to Pseudomonas, Escherichia coli, and Enterococcus majodoratus. In some embodiments, one or more membranes filters can be used to trap chemicals that are parts of a detergent. When aerobic bacteria are used for detergent digestion, air (e.g., compressed air) can be injected or otherwise introduced into the detergent removal unit(s) 114 or portions thereof to accelerate digestion of components of the effluent. In some implementations, the resulting effluent containing the aerobic bacteria can be reused or fed to a unit for biogas or manure production. Such reuse of the effluent may result in a zero waste scenario. Macro organisms such as worms (e.g., earthworms) can also be used, for example, for vermicomposting to break down organic waste materials present in solids present in the effluent. Membrane filters can be ultra filtration and/or micro filtration membranes. Surfactants in the detergent can be removed by biological, membrane filtrations. Further, one or more flocculants and/or coagulating additives can be added to the defoamed effluent 107B to cause particulates present in the detergent to clump together for removal by filtration (e.g., via component(s) of the particulate removal unit 112).

In some embodiments, a third sensor 123 is disposed downstream of the detergent removal unit(s) 114 to measure characteristic(s) of the defoamed effluent 107C. Such characteristics can include at least one of a color, pH, chemistry, conductivity, or a level of total dissolved solids. It is also contemplated that the third sensor 123 can be disposed within the detergent removal unit(s) 114. The characteristic(s) of the defoamed effluent 107C may be indicative of microbial load (e.g., a level of microbes present) in the defoamed effluent 107C and can include, for example, a turbidity, a color, and/or an electrical conductivity of the defoamed effluent 107C. Microscopic sampling, membrane filtration, and/or flow cytometry can also be used to determine the microbial load or otherwise evaluate the presence of microbial activity. The third sensor 123 can be disposed upstream of other unit(s) in the effluent processing system 108, such as the microbe treatment unit(s) 116. The third sensor 123 can be used to provide information on the quality of the defoamed effluent 107C to a controller such as the controller(s) 132. Downstream treatment or processing of the defoamed effluent 107C can then be adjusted, for example, by the controller(s) 132, based on the characteristic(s) of the defoamed effluent 107C. For example, operating parameters of the microbe treatment unit(s) 116 can be adjusted based on the characteristic(s) of the defoamed effluent 107C. Operating parameters of the microbe treatment unit(s) 116 that can be adjusted based on characteristics of the defoamed effluent 107C included but are not limited to an amount of recycle through the unit.

In some embodiments, a third pump 122 is disposed downstream of the detergent removal unit(s) 114 for delivering the defoamed effluent 107C to another unit of the effluent processing system 108 or through an outlet port of the effluent processing system, such as the microbe treatment unit(s) 116. However, in some embodiments, the third pump 122 is omitted and, instead, the effluent supply pump 106 is used to move the defoamed effluent 107C through the effluent processing system 108.

The microbe treatment unit(s) 116 is in fluid communication with the defoamed effluent 107C and is operative to reduce microbial load of the defoamed effluent 107C. In some embodiments, the microbe treatment unit includes a fine filter, for example, a filter having a micron rating of about 5 microns or less. In some embodiments, the microbe unit includes at least one of a chemical treatment unit or a UV disinfection unit. In some configurations the chemical treatment unit comprises a tank with a disinfecting chemical disposed therein. In some configurations, the chemical treatment unit comprises a tank coupled to a source of a disinfecting chemical. Suitable disinfecting chemicals include but are not limited to chlorine, ozone, etc.

In some embodiments, a recovered fluid sensor 125 is disposed downstream of the effluent processing system 108 to measure characteristic(s) of the recovered fluid 109 that exits the effluent processing system 108. In some embodiments, the characteristic(s), may be indicative of an amount of detergent present in the recovered fluid 109 and can include a pH value, a chemistry (e.g., a concentration of a surfactant or a detergent component), or a relative quantity of constituent components present in the recovered fluid 109. In some configurations, the recovered fluid sensor 125 is disposed upstream of the detergent reconstitution unit 126. The recovered fluid sensor 125 can be used to provide information on the composition of the recovered fluid to a controller such as the controller(s) 132. In one example, the color of the recovered fluid 109 can be used to gauge the effectiveness of particulate removal. In another example, recovered fluid sensor 125 may chemically detect one or more surfactants that are parts of detergent in the liquid and, as such, can be used to measure or otherwise indicate the effectiveness of detergent removal. In another example, microscopic analysis may be performed on the recovered fluid 109 to assess the effectiveness of microbial treatments.

Reconstitution of the recovered fluid 109 via the detergent reconstitution unit 126 can then be adjusted, for example, by the controller(s) 132, based on the characteristic(s) of the recovered fluid 109. For example, operating parameters of the detergent reconstitution unit 126 can be adjusted based on the characteristic(s) of the recovered fluid 109. Operating parameters of the detergent reconstitution unit 126 that can be adjusted based on characteristics of the recovered fluid 109 include but are not limited to an amount of detergent added to the recovered fluid 109. For example, the controller 132 may adjust a flow rate of the recovered fluid 109 and/or a flow rate of detergent in the detergent reconstitution unit 126 based on the characteristics of the recovered fluid 109.

In some embodiments, a recovered fluid pump 124 is disposed downstream of the effluent processing system 108 for delivering the recovered fluid 109 the detergent reconstitution unit 126.

The recovered fluid 109 can be fed directly to the detergent reconstitution unit 126 from the effluent processing system 108. For example, the detergent reconstitution unit 126 may be in fluid communication with the effluent processing system 108 such that recovered fluid 109 is reconstituted in a continuous process with the effluent processing. Such a reconstitution process may be guided by sensors such as the recovered fluid sensor 125 and may be automated, for example, by the controller 132. In some embodiments, the recovered fluid 109 can be stored in one or more vessels, such as tanks, totes, or drums (not shown in FIG. 1) and reconstituted in batches.

The detergent reconstitution unit 126 is configured to add one or more components to the recovered fluid 109 to generate a fresh cleaning fluid. In some embodiments, the detergent reconstitution unit comprises a detergent reservoir 150 with a detergent and a detergent supply pump 152 that is in fluid communication with the detergent reservoir. Components of detergents like surfactants or concentrated detergents can be added for reconstitution.

In some approaches, one or more analytical tests such as energy dispersive X-ray fluorescence (EDXRF) can be used to identify and/or measure elements in the recovered fluid 109. Data from such analytical tests can be used to determine the composition of the recovered fluid 109 and to inform what components and/or amounts of components to be added via the detergent reconstitution unit 126.

In some embodiments, the detergent reconstitution unit 126 also includes filters, settlement tanks with flocculants, and/or other treatment tanks with additives for removing any processing additives added to the effluent in the effluent processing system 108. In some embodiments, the effluent processing system may operate to process a continuous flow of effluent between a start time and an end time. In other embodiments, one or more components of the effluent processing system may be supplied with fluid periodically, to process batches of effluent at intervals. Periodic processing may be particularly suitable, for example to enable settlement of solids in a settlement tank. The flocculant and coagulant chemicals help to coagulate the suspended impurities that can be subsequently removed by a filtration unit.

The system 100 includes one or more controllers 132 that are operatively coupled to one or more components of the system 100. In some embodiments, the controller(s) 132 may be operatively coupled to one or more of the pumps 106, 118, 120, 122, 124. In this manner, the controller(s) 132 may receive data from and/or control operating parameters of the pumps 106, 118, 120, 122, 124. The controller(s) 132 may also be operatively coupled to one or more of the sensors 119, 121, 123. So configured, the controller(s) 132 can receive data from and/or control operating parameters of the sensors 119, 121, 123. The controller(s) 132 may also be coupled to devices in the foam collapsing unit 110. For example, the controller(s) 132 may be operatively coupled with a physical agitation device such as a sonication device to control operating parameters of the physical agitation device such as the operating frequencies. In one example, the controller(s) 132 can change the operating frequency of the sonication device based on a foam bubble size.

It is contemplated that the systems and units of the system 100 such as the effluent processing system 108 and the detergent reconstitution unit 126 or portions thereof, can include one or more controllable devices or one or more devices that output data. Such devices can include but are not limited to pumps, valves, flow meters (e.g., liquid flow meters), pressure regulators, sensors (e.g., pH sensors, turbidity sensors, pressure), a UV system, an ultrasonic transducer, sonication devices, etc. The controller(s) 132 can be used to control or operate such devices. The controller(s) 132 can also be configured to receive data from such devices.

In some embodiments, the controller(s) 132 include one or more controllers associated with a mobile cart that includes one or more components of the system 100. In some configurations, the system 100 can be modular with one or more of the foam collapsing unit 110, the particulate removal unit 112, the detergent removal unit(s) 114, and the microbe treatment unit(s) 116 arranged as standalone modules with their own associated controller. For example, the system 100 may include a foam collapsing or destabilization module (e.g., via a reverse centrifuge) that is a portable cart to handle foam and collect the effluent. Such a cart may have an associated controller and be powered on its own battery and operated to be at the point of effluent discharge from wash. Other modules, such as particulate removal, detergent removal, or microbe treatment modules, can be coupled to the foam collapsing module. The modules may be controlled independently or through a central controller that takes feedback from different modules or units.

The controller(s) 132 may include one or more processor(s) 134 and one or more memory device(s) 136. The one or more processor(s) 134 may include any suitable processing device, such as a microprocessor, microcontroller, integrated circuit, logic device, or other suitable processing device. The one or more memory device(s) 136 may include one or more computer-readable media, including, but not limited to, non-transitory computer-readable media, random access memory (RAM), read only memory (ROM), hard drives, flash drives, or other memory devices.

The one or more memory device(s) 136 may store information accessible by the one or more processor(s) 134, including computer-readable instructions 142 that can be executed by the one or more processor(s) 134. The instructions 142 can be any set of instructions that when executed by the one or more processor(s) 134, cause the one or more processor(s) 134 to perform operations. The instructions 142 may be software written in any suitable programming language or can be implemented in hardware. In some embodiments, the instructions 142 may be executed by the one or more processor(s) 134 to cause the one or more processor(s) to perform operations, such as the cleaning operations of a gas turbine engine, as described herein, and/or any other operations or functions of the controller. Additionally, and/or alternatively, the instructions 142 may be executed in logically and/or virtually separate threads on the processor(s) 134. The memory device(s) 136 can further store data 140 that can be accessed by the processor(s) 134.

The controller(s) 132 can also include a communications interface 146 used to communicate, for example, with the components of the system 100. The communications interface 146 may include any suitable components for interfacing with one more communications network(s), including for example, transmitters, receivers, ports, controllers, antennas, or other suitable components. The controller(s) 132 may also be communication (e.g., via the communications interface 146) with the various components or devices of the system 100 described above and may selectively operate such components or devices in response to user input and feedback from these components. More specifically, for the embodiment depicted, the controller(s) 132 can be configured to communicate through a wireless communication network 148 through communications interface 146, such that the controller(s) 132 may send or receive information and/or commands to or from the various components of the exemplary wash system 52 wirelessly. It should be appreciated, however, that in other embodiments, the controller(s) 132 may additionally, or alternatively, use a wired communication bus to communicate with various components or devices of the system 100.

In some embodiments, the effluent processing system 108 includes one or more recycle lines to return the effluent to an earlier unit within the foam processing unit 108 for further processing. The recycle line(s) can disposed downstream of any one of the various units in the effluent processing system 108. Further, the recycle line(s) can be used to return or recycle the effluent to an upstream unit, for example, for another pass through the unit. For example, if data from a sensor or a manual sample indicates that particulate removal was insufficient in the particulate removal unit(s) 112 (e.g., particulate levels are too high), a recycle line may be used to return the effluent to the inlet of the particulate removal unit(s) 112 for another pass through. Similarly, if data from a sensor or manual sample indicates that microbe treatment was insufficient in the microbe treatment unit(s) 116 (e.g., particulate levels are too high), a recycle line may be used to return the effluent to the inlet of the microbe treatment unit(s) 116 for another pass through.

In some embodiments, the system 100 includes a concentrator unit 127 to concentrate the recovered fluid 109 and assist with solids removal. The concentrator unit 127 is disposed downstream of the effluent processing system 108. The concentrator unit 127 may receive the recovered fluid 109 from the outlet of the effluent processing system 108 and/or defoamed effluent 107A, 107B, 107C from intermediate units within effluent processing system 108. The concentrator unit 127 can include any device or equipment that removes or reduces the amount liquid present in the recovered fluid and/or the defoamed effluent. In some examples, the concentrator unit 127 includes one or more of an evaporator, a concentrator, a reverse osmosis unit, a filter, a centrifuge, a settling tank, etc. The concentrator unit can also include a unit, such as a tank or other vessel, for pretreatment of the recovered fluid 109, for example, with a flocculant,
In some embodiments, the system 100 also includes a segregation system 128 for the segregation and/or further processing of one or more outputs from the effluent processing system 108. The segregation system 128 can segregate the recovered fluid 109 into one or more waste outputs. The waste outputs can be disposed of or processed in different ways. For example, the segregation system 128 may separate and/or deliver certain liquid outputs to different disposal system. Water may be disposed of in drains and other liquid outputs may be recycled and/or reconstituted to generate fresh detergent. For example, water or other liquid outputs may be sent to the detergent reconstitution unit 126). In another example, the segregation system 128 may separate and/or deliver certain solids outputs for specialist recycling and/or disposal. Certain solids outputs may be reconstituted via the detergent reconstitution unit 126. Other solids outputs may be separated and/or processed for specialist disposal, for example chemical disposal. Further, certain solids and/or liquid outputs may be sent to a biogas unit for biogas generation.

As illustrated, the segregation system 128 is disposed downstream of the concentrator unit 127. In other configurations, the segregation system 128 may be disposed upstream of the concentrator unit 127. Further, the segregation system 128 may be coupled to or receive output from various units of the effluent processing system 108. For example, the segregation system 128 may collect secondary solids from one or more units of the effluent processing system 108 (e.g., solids that settle or are removed via the particulate removal unit(s) 112, the detergent removal unit(s) 114, and/or the microbe treatment unit(s) 116).

In some implementations, the segregation system 128 include one or more vessels (e.g., tanks), piping systems, valves, fittings, separators, etc. to segregate the outputs. Any suitable solid-liquid separation, liquid-liquid separation, or solid or liquid transport equipment can be used in the segregation system 128. Once segregated, the outputs may undergo further processing, for example, for disposal or recycling. Liquid outputs (e.g., water) may be disposed of in a suitable manner or recycled. Solid outputs may be disposed of or undergo further processing, for example, to reconstitute detergent for re-use. For example, solids outputs may be sent to the detergent reconstitution unit 126.

In some embodiments, one or more components of the system 100 is disposed on a portable or mobile cart. In some examples, the effluent processing system 108 is disposed on a portable cart.

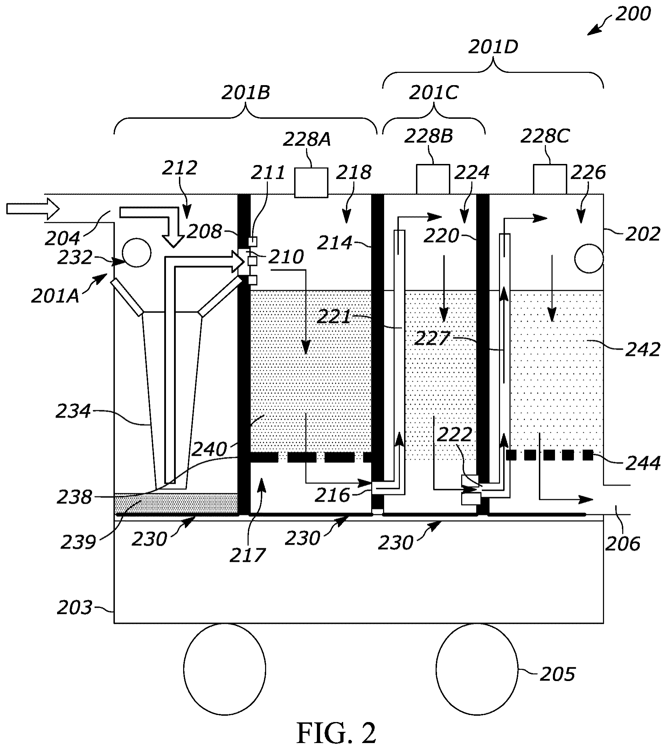

FIG. 2 shows an exemplary portable cart 200 that includes an effluent processing system or portions thereof. Specifically, the portable cart 200 includes a foam collapsing unit 201A, particulate removal units 201B, a detergent removal unit 201C, and a microbe treatment unit 201D which together act as an effluent processing system. In some embodiments, the units of the effluent processing system on the portable cart 200 include one or more units of the effluent processing system 108 that is shown and described with reference to FIG.1. The foam collapsing unit 201, the particulate removal units 201B, the detergent digestion unit 201C, and the microbe treatment unit 201D can correspond to the foam collapsing unit 110, the particulate removal unit 112, the detergent digestion unit 114, and the microbe treatment unit 116, respectively, of FIG. 1. Thus, any of the example aspects disclosed in connection with FIG. 1 can likewise apply to the cart 200 of FIG. 2.

In some embodiments, the portable cart 200 does not include a foam generation unit or a foam washing system. Further, the portable cart 200 does not include hardware such as foam generation equipment configured to generate a foamed cleaning solution. As such, the portable cart 200 may function as an effluent treatment system alone and can be moved from engine to engine to process effluent products from foam cleaning. Advantageously, in some applications, the portable cart 200 can be used to treat effluent that has been captured and stored following foam washing and need not be used in real time with foam generation and foam washing processes.

In some embodiments, the portable cart 200 is used in conjunction with a cleaning cart (e.g., a foam wash cart) that is configured to generate or dispense fluid for a cleaning operation. In some examples, the cleaning cart includes foam generation equipment. In some examples, the portable cart 200 also serves as the cleaning cart and, for example, may have one or more units to generate or dispense a cleaning fluid such as a foam generation unit. In one configuration, a foam collapsing unit 201A of the portable cart 200 includes a sonication device that is configured to operate in a cleaning mode and a foam collapse mode. In the cleaning mode the sonication device in which the sonication device sonicates a cleaning fluid to enhance or sustain the foaming ability of the cleaning fluid to assist with a cleaning operation. The sonication device may be configured to generate sound waves having a frequency in the range of about 40 kilohertz or greater in the cleaning mode and in the range of about 20 to about 40 kilohertz in the foam collapse mode. In the foam collapse mode, the sonication device sonicates effluent from the cleaning operation to destroy or collapse foam in effluent from the cleaning operation. The foam collapsing unit 201A may be a portable unit that can be moved from a cleaning cart to a portable cart such as the portable cart 200 that can be used for effluent treatment. The cleaning cart and/or the portable cart 200 may also be equipped with a heater that heats the cleaning fluid to enhance the effectiveness of the cleaning fluid. Any suitable heater or heating mechanism may be used and, in some aspects, the heater is an electric heater.

As illustrated, the portable cart 200 includes a support frame 203 mounted on a plurality of wheels 205 to improve the mobility of the cart and facilitate quick and easy transportation of the effluent processing system. In some configurations, the portable cart 200 also includes a pivoting tug bar such that the portable cart may be towed by a vehicle to a desired location. Other suitable towing mechanisms include A-frame towbars for carts equipped with casters for at least some of their wheels or, in other embodiments, pivoting towbars connected to Ackerman steering linkages to turn the steering wheels.

A housing 202 is disposed on the support frame 203 of the portable cart 200. The housing 202 defines or forms an inlet port 204 and an outlet port 206. The housing 202 further defines a first chamber 212, a second chamber 218, a third chamber 224, and fourth chamber 226. The housing includes a first wall 208, a second wall 214, and a third wall 220 that divide an internal cavity of the housing into the first chamber 212, the second chamber 218, the third chamber 224, and the fourth chamber 226. The first wall 208 is disposed between the first chamber 212 and the second chamber 218. The second wall 214 is disposed between the second chamber 218 and the third chamber 224. The third wall 220 is disposed between the third chamber 224 and the fourth chamber 226.

The housing 202 further defines one or more access ports 228A, 228B, 228C in fluid communication with one or more of the first chamber, the second chamber, the third chamber, and the fourth chamber. In the illustrated embodiment, the housing 202 defines a first access port 228A that is in fluid communication with the second chamber 218, a second access port 228B that is in fluid communication with the third chamber 224, and a third access port 228C that is in fluid communication with the fourth chamber 226. The access ports 228A, 228B, 228C can be used to access the various chambers, for example, to obtain samples of the effluent at various processing stages. In addition, one or more sensors can be inserted into the access ports 228A, 228B, 228C for process monitoring. The sensors can include one or more of the sensors (e.g., sensors 119, 121, 123, 125) that are shown and described with reference to FIG. 1. In some examples, the access ports 228A, 228B, 228C can be used to add chemicals or other additives to the various chambers.

The housing 202 further includes one or more maintenance openings 230. The maintenance openings may be in fluid communication with one of more of the first chamber 212, the second chamber 218, the third chamber 224, or the fourth chamber 226. Maintenance doors are coupled to the maintenance openings 230 to provide access to the various chambers of the portable cart 200. The maintenance openings 230 can be used to perform work on the various units. For example, the maintenance openings 230 may be used to replace filters or remove sediments that accumulate at the bottom of the chambers.

The first chamber 212 is in fluid communication with the inlet port 204 and the second chamber 218. The first wall 208 includes a first opening 210 that places the first chamber 212 in fluid communication with the second chamber 218. The first chamber includes 212 the foam collapsing unit 201A and a first separator 234 of the particulate removal unit 201B.

The foam collapsing unit 201A is operable to reduce aeration of the effluent. The foam collapsing unit 201A may include a sonication device 232. As illustrated, the sonication device 232 is disposed adjacent to the inlet port 204 of the housing 202. In this manner the sonication device 232 reduces aeration levels in the effluent as it enters the housing 202 and before the effluent enters other units. The foam collapsing unit 201A (e.g., a sonication device) may be positioned close to the inlet port 204 where significant foam is expected. However, it is contemplated that the sonication device 232 may be disposed anywhere in the first chamber 212.

The first separator 234 of the particulate removal unit 201B is a vortex separator. Though, it is contemplated that any separator device that is operable to remove solid sediment from the effluent can be used. In operation, the first separator 234 removes particulates 239 from the effluent, which may collect or accumulate at the bottom of the first chamber 212. The effluent exits the first chamber 212 via the first opening 210 in the first wall 208 and enters the second chamber 218. In some configurations, the first opening 210 is disposed in a top portion of the first wall 208 such that the effluent enters the top of the second chamber 218.

The second chamber 218 is in fluid communication with the first chamber 212 and the third chamber 224. The second wall 214 includes a second opening 216 that places the second chamber 218 in fluid communication with the third chamber 224. The second chamber 218 includes a second separator 211 and a third separator 240 of the particulate removal unit 201B. In the illustrated embodiment, the second separator 211 is a magnetic separator. In the illustrated embodiment, the third separator 240 is a coarse filter. The third separator 240 can include one or more of a sand filter, a paper filter, and/or a mesh screen. It is contemplated that other types of separators operable to separate particulate matter from a liquid may be employed in the second chamber 218 as the second separator 211 or the third separator 240.

Though, as illustrated, the second separator 211 is disposed in the second chamber 218, in some configurations, the second separator 211 may be included in the first chamber 212. For example, the second separator 211 may be disposed in the first chamber 212 adjacent to the first opening 210 in the first wall 208.

The second chamber 218 further includes an inner support wall 238 with a plurality of holes disposed therein. The inner support wall 238 extends between the first wall 208 and the second wall 214. The inner support wall 238 supports the third separator 240. The inner support wall 238 forms a chamber 217 that is disposed between the second chamber 218 and the support frame 203. In the illustrated configuration, the chamber 217 is in fluid communication with the third chamber 224 such that effluent exits the third separator 240 and passes through the plurality of holes in the inner support wall 238 into the chamber 217 and enters the third chamber 224 through the second opening 216.

The third chamber 224 is in fluid communication with the fourth chamber 226. The third wall 220 includes an opening 222 that places the third chamber 224 in fluid communication with the fourth chamber 226. The third chamber 225 serves as the detergent removal unit 201C and, also, as a portion of the microbe treatment unit 201D. The third chamber 224 includes at least one of an enzyme or bacteria for digesting detergent present in the effluent. Further, in some embodiments, the third chamber 224 also includes a UV disinfection unit to reduce the microbial load of the effluent. The third chamber 224 also can also include one or more additives for reducing the microbial load of the effluent. In some examples, the third chamber includes chlorine to kill bacteria. In some embodiments, the third chamber 224 also serves as a portion of the particulate removal unit 201B. In some examples, the third chamber 224 includes a coagulating additive that coagulates dust dissolved in the effluent, thereby removing particulates from the effluent. In some examples, the third chamber 224 also includes a metal eating bacteria to eliminate metallic particulates present in the effluent.

In some embodiments, a tube 221 coupled to the second opening 216 in the second wall 214. The tube 221 is disposed in the third chamber 224 and extends from a bottom portion of the third chamber 224 to a top portion of the third chamber 224. The tube 221 may be positioned within the third chamber 224 to deliver fluid to the top portion of the third chamber 224. Fluid leaving the second chamber 218 travels through the tube 221 and exits the tube at the top portion of the third chamber 224. In this manner, the tube 221 helps to promote fluid flow from the top portion of the third chamber 224 towards the bottom portion of the third chamber 224 so that fluid does not merely travel from the second opening 216 to the third opening 222, without passing though contents of the third chamber 224. The tube 221 carries effluent passing through the portable cart 200 from filters in the second chamber 218 to bacterial treatment in the third chamber 224.

The fourth chamber 226 is in fluid communication with the third chamber 224 and the outlet port 206 of the portable cart 200. The fourth chamber 226 includes the microbe treatment unit 201D. In the illustrated embodiment, the microbe treatment unit 201D comprises a fourth separator 242. The fourth separator is a fine filter that is operable to reduce the microbial load of the effluent. In some embodiments, the fine filter has a micron rating of about 10 microns or less and, in some aspects, about 5 microns or less. The fourth chamber 226 includes a support wall 244 that supports the fourth separator 242. The support wall 244 has a plurality of holes to allow fluid flow through the support wall 244.

In some embodiments, a tube 227 is coupled to the third opening 222 in the third wall 220. The tube 227 is disposed in the fourth chamber 226 and extends from a bottom portion of the fourth chamber 226 to a top portion of the fourth chamber 226. The tube 227 may be positioned within the fourth chamber 226 to deliver fluid to the top portion of the fourth chamber 226. Fluid leaving the third chamber 224 travels through the tube 227 and exits the tube at the top portion of the fourth chamber 226. In this manner, the tube 227 helps to promote fluid flow from the top portion of the fourth chamber 226 towards the bottom portion of the fourth chamber 226 so that fluid does not merely travel from the third opening 222 to the outlet port 206, without passing though contents of the fourth chamber 226. The tube 227 carries effluent passing through the portable cart 200 from bacterial treatment in the third chamber 224 to fine filtration in the fourth chamber 226.

Effluent exits the fourth chamber 226 and the portable cart 200 via the outlet port 206. The effluent exits the portable cart 200 as a recovered fluid. The recovered fluid may be released to the environment or, in some embodiments, fed to a detergent reconstitution unit such as the detergent reconstitution unit 126 that is shown and described with reference to FIG. 1.

In some embodiments, the portable cart 200 is separate from a foam generator associated with the cleaning operation performed. For example, the portable cart may be separate from a foam generator used to generate a foam washing fluid that becomes the effluent processed by the portable cart.

In the portable cart 200, the foam collapsing unit 201A is included on the cart along with the particulate removal unit 201B, the detergent removal unit 201C and the microbe treatment unit 201D. However, it is to be understood that, in some embodiments, the foam collapsing unit 201A may be disposed on separate cart.

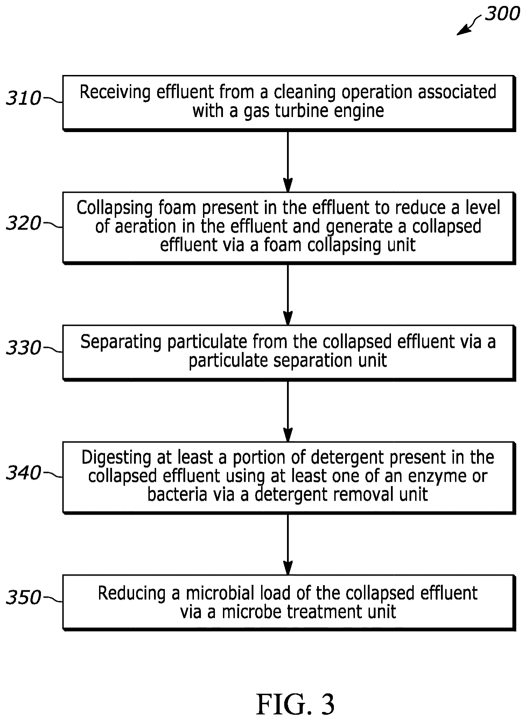

FIG. 3 shows a flow chart of an exemplary method 300 for processing effluent from a cleaning operation for a gas turbine engine. In some embodiments, one or more aspects of the method 300 are performed by the system 100 or portions thereof. The effluent may be the effluent 105 described with reference to FIG. 1.

In the method 300, at 310, effluent from a cleaning operation associated with a gas turbine engine is received. In some embodiments, the effluent is received by an effluent processing system such as the effluent processing system 108 of FIG. 1. The effluent may be received, for example, from one or more effluent reservoirs such as the effluent reservoir 104 shown and described with reference to FIG. 1.

At 320, foam present in the effluent is collapsed via a foam collapsing unit to reduce a level of aeration in the effluent. Collapsing foam present in the effluent generates a defoamed effluent. The foam collapsing unit may include at least one of a sonication device or a chemical treatment unit. In some embodiments, the foam collapsing unit is the foam collapsing unit 110 of FIG. 1.

At 330, particulates are separated from the defoamed effluent via a particulate separation unit. In some embodiments, the particulate separation unit includes one or more of the particulate separation unit(s) 112 shown and described with reference to FIG. 1.

At 340, optionally, at least a portion of the detergent present in the defoamed effluent is digested via a detergent removal unit. The detergent removal unit may digest the detergent using at least one of an enzyme or bacteria. In some embodiments, the detergent removal unit includes one or more of the detergent removal unit(s) 114 shown and described with reference to FIG. 1.

At 350, a microbial load of the defoamed effluent is reduced via a microbe treatment unit. In some embodiments, the microbe treatment unit includes one or more of the microbe treatment unit(s) 116 shown and described with reference to FIG. 1.

Further aspects of the disclosure are provided by the subject matter of the following clauses:
A system for processing effluent from cleaning operation for a gas turbine engine, the system comprising: a foam collapsing unit in fluid communication with an effluent reservoir comprising an effluent, the foam collapsing unit operative to reduce aeration of the effluent and generate a defoamed effluent; a particulate removal unit that is in fluid communication with the defoamed effluent and is operative to separate particulates from the defoamed effluent; and a microbe treatment unit that is in fluid communication with the defoamed effluent and is operative to reduce microbial load of the defoamed effluent; wherein the particulate removal unit and the microbe treatment unit are disposed in serial flow to treat the defoamed effluent and output a recovered fluid.

The system of any preceding clause, further comprising: an effluent reservoir for storing an effluent from a cleaning operation; wherein the foam collapsing unit is in fluid communication with the effluent reservoir.

The system of any preceding clause, further comprising: an effluent supply pump in fluid communication with the effluent reservoir for pressurizing flow of the effluent through the system.

The system of any preceding clause, further comprising: one or more sensors configured to measure a condition of the defoamed effluent; and a controller operatively coupled to the effluent supply pump and the one or more sensors, the controller configured to receive data on the condition of the defoamed effluent from the one or more sensors, and adjust a flow rate of the effluent via the effluent supply pump based on the condition.

The system of any preceding clause, wherein the condition comprises at least one of a color, pH, chemistry, conductivity, or a level of total dissolved solids of the defoamed effluent.

The system of any preceding clause, further comprising: a detergent reconstitution unit configured to add one or more components to the recovered fluid to generate a cleaning fluid.

The system of any preceding clause, wherein the detergent reconstitution unit comprises a detergent reservoir with a detergent and a detergent supply pump in fluid communication with the detergent reservoir.

The system of any preceding clause, further comprising: one or more sensors configured to measure a characteristic of the recovered fluid.

The system of any preceding clause, wherein the condition of the recovered fluid comprises at least one of a pH value, a conductivity measurement, a chemistry, or a relative quantity of constituent components.

The system of any preceding clause, further comprising: a controller operatively coupled to the detergent supply pump and the one or more sensors, the controller configured to receive data on the condition of the recovered fluid from the one or more sensors, and adjust a flow rate of the surfactant via the detergent supply pump based on the condition.

The system of any preceding clause, wherein the foam collapsing unit comprises at least one of a physical agitation device, a chemical treatment unit, or an ultraviolet (UV) light treatment unit.

The system of any preceding clause, wherein the physical agitation device comprises at least one of a sonication device or a spray device.

The system of any preceding clause, wherein the sonication device operates at a frequency in the range of about 20 kilohertz to about 40 kilohertz.

The system of any preceding clause, wherein the chemical treatment unit comprises a source of a collapsing additive coupled to a delivery device.

The system of any preceding clause, wherein the collapsing additive is a lipid or a hydrophobic solid.

The system of any preceding clause, wherein the particulate removal unit comprises at least one of a settlement tank with a flocculant, a centrifugal separator, a vortex separator, a filter, or a magnetic separator.

The system of any preceding clause, wherein the filter comprises at least one of a sand filter, a paper filter, or a mesh screen.

The system of any preceding clause, wherein the settlement tank includes at least one flocculant.

The system of any preceding clause, wherein the microbe treatment unit comprises at least one of a chemical treatment unit or a UV disinfection unit.

The system of any preceding clause, wherein one or more of the particulate removal unit, the microbe treatment unit, and the foam collapsing unit are disposed on a portable cart.

The system of any preceding clause, further including a detergent removal unit that is operative to break down a portion of a detergent present in the defoamed effluent.

The system of any preceding clause, further comprising: a concentrator unit for concentrating the recovered fluid to assist with solids removal.

The system of any preceding clause, wherein the concentrator unit includes at least one of an evaporator, a concentrator, or a reverse osmosis unit.

The system of any preceding clause, further comprising: a segregation system to segregate the recovered fluid into one or more waste outputs.

A portable cart for treating an effluent from a cleaning operation for a gas turbine engine, the portable cart separate from a foam generator, the portable cart comprising: a foam collapsing unit operative to reduce aeration of the effluent and generate a defoamed effluent; a particulate removal unit that is operative to separate particulates from the defoamed effluent; and a microbe treatment unit that is operative to reduce microbial load of the defoamed effluent; wherein the particulate removal unit and the microbe treatment unit are disposed in serial flow on the portable cart to treat the defoamed effluent and output a recovered fluid.

The portable cart of any preceding clause, further comprising: a housing forming an inlet opening and an outlet opening, the housing defining a first chamber, a second chamber, and a third chamber, the first chamber in fluid communication with the inlet opening and the second chamber, the second chamber in fluid communication with the third chamber, and the third chamber in fluid communication with the outlet opening; wherein the first chamber includes a first separator of the particulate removal unit, the second chamber includes a second separator of the particulate removal unit, and the third chamber includes the microbe treatment unit.

The portable cart of any preceding clause, wherein the first separator is vortex separator and the second separator is a coarse filter.

The portable cart of any preceding clause, wherein the third chamber also serves as a portion of the microbe treatment unit.

The portable cart of any preceding clause, wherein the microbe treatment unit comprises a UV disinfection unit.

The portable cart of any preceding clause, wherein the foam collapsing unit comprises a sonication device.

The portable cart of any preceding clause, wherein the housing further defines one or more access ports in fluid communication with one or more of the first chamber, the second chamber, the third chamber, and the fourth chamber.

The portable cart of any preceding clause, wherein the housing further defines a maintenance opening with a maintenance door coupled thereto.

The portable cart of any preceding clause, wherein the portable cart is separate from a foam generator associated with the cleaning operation.

The portable cart of any preceding clause, further including a detergent removal unit that is operative to break down a portion of a detergent present in the defoamed effluent.

A method for processing an effluent from a cleaning operation for a gas turbine engine cleaning operation to generate a recovered fluid, the method comprising:
receiving effluent from a cleaning operation associated with a gas turbine engine ;
collapsing foam present in the effluent via a foam collapsing unit to reduce a level of aeration in the effluent and generate a defoamed effluent; separating particulate from the defoamed effluent via a particle separation unit; and reducing a microbial load of the defoamed effluent via a microbe treatment unit.

The method of any preceding clause, further including digesting at least a portion of detergent present in the defoamed effluent using at least one of an enzyme or bacteria via a detergent removal unit.

The method of any preceding clause, further comprising reconstituting the recovered fluid by adding one or more components to the recovered fluid to generate a cleaning fluid via a detergent reconstitution unit.

The system of any preceding clause, further comprising a detergent removal unit that is operative to break down a portion of a detergent in the defoamed effluent, wherein the detergent removal unit comprises a chamber including at least one of an enzyme, a microorganism, or a macro organism for digesting detergent present in the defoamed effluent.

## Claims

1. A system (100) for processing effluent (105) from cleaning operation for a gas turbine engine (102) cleaning operation, the system (100) comprising:
a foam collapsing unit (110, 201A) in fluid communication with an effluent (105) reservoir (104) comprising an effluent (105), the foam collapsing unit (110, 201A) operative to reduce aeration of the effluent (105) and generate a defoamed effluent (107A, 107B, 107C);
a particulate removal unit (201B) that is in fluid communication with the defoamed effluent (107A, 107B, 107C) and is operative to separate particulates (239) from the defoamed effluent (107A, 107B, 107C); and
a microbe treatment unit (201D) that is fluid communication with the defoamed effluent (107A, 107B, 107C) and is operative to reduce microbial load of the defoamed effluent (107A, 107B, 107C);
wherein the particulate removal unit (201B) and the microbe treatment unit (201D) are disposed in serial flow to treat the defoamed effluent (107, 107A, 107B, 107C) and output a recovered fluid (109).

2. The system (100) of claim 1, further comprising:
a detergent reconstitution unit (126) configured to add one or more components to the recovered fluid (109) to generate a cleaning fluid.

3. The system (100) of claim 2, wherein the detergent reconstitution unit (1226) (126) comprises a surfactant reservoir (150) with a detergent and a detergent supply pump (152) in fluid communication with the detergent reservoir (150).

4. The system (100) of any preceding claim, further comprising:
one or more sensors configured to measure a characteristic of the recovered fluid (109).

5. The system (100) of claim 4, wherein the condition of the recovered fluid (109) stream comprises at least one of a pH value, a conductivity measurement, a chemistry, or a relative quantity of constituent components.

6. The system (100) of any one of claims 4 to 5, further comprising:
a controller operatively coupled to the detergent supply pump (152) and the one or more sensors, the controller configured to receive data (140) on the condition of the recovered fluid (109) from the one or more sensors, and adjust a flow rate of the detergent via the detergent supply pump (152) based on the condition.

7. The system (100) of any preceding claim, wherein the foam collapsing unit (110, 201A) comprises at least one of a physical agitation device, a chemical treatment unit, or an ultraviolet (UV) light treatment unit.

8. The system (100) of claim 7, wherein the physical agitation device comprises at least one of a sonication device (232) or a spray device.

9. The system (100) of claim 8, wherein the sonication device (232) operates at a frequency in the range of about 20 kilohertz to about 40 kilohertz.

10. The system (100) of claims 7, wherein the chemical treatment unit comprises a source of a collapsing additive coupled to a delivery device.

11. The system (100) of claim 10, wherein the collapsing additive is a lipid or a hydrophobic solid.

12. The system (100) of any preceding claim, wherein the particulate removal unit (201B) comprises at least one of a settlement tank with a flocculant, a centrifugal separator, a vortex separator, a filter, or a magnetic separator.

13. The system (100) of any preceding claim, further comprising a detergent removal unit (201C) that is operative to break down a portion of a detergent in the defoamed effluent (107A, 107B, 107C), wherein the detergent removal unit (201C) comprises a chamber including at least one of an enzyme, a microorganism, or a macro organism for digesting detergent present in the defoamed effluent (107A, 107B, 107C).

14. The system (100) of any preceding claim, further comprising a concentrator unit (127) for concentrating the recovered fluid to assist with solids removal.

15. The system (100) of any preceding claim, wherein the system is separate from a foam generator.
